# EUROPÄISCHE PATENTSCHRIFT

(11) **EP 0 455 882 B1**
(45) Veröffentlichungstag und Bekanntmachung des Hinweises auf die Patenterteilung: **03.08.1994**
(21) Anmeldenummer: 90124832.8
(22) Anmeldetag: 19.12.1990
(51) Int. Cl.: F02D 11/10

(54) **Verstelleinrichtung für eine Drosselklappe**
Control apparatus for a throttle valve
Dispositif de réglage pour un papillon des gaz

(30) Priorität: 07.05.1990 DE 4014555
(43) Veröffentlichungstag der Anmeldung: 13.11.1991
(73) Patentinhaber: VDO Adolf Schindling AG, D-60487 Frankfurt (DE)
(72) Erfinder: Westenberger, Helmut, W-6238 Hofheim (DE)
(74) Vertreter: Klein, Thomas, Dipl.-Ing. (FH)

(56) Entgegenhaltungen:
- EP-A- 0 030 022
- DE-A- 3 641 244
- DE-C- 3 900 437
- US-A- 4 411 231
- US-A- 4 526 060

## Beschreibung

Die Erfindung bezieht sich auf eine Verstelleinrichtung für eine im Ansaugstutzen einer Brennkraftmaschine drehbar gelagerten Drosselklappe, wobei die Drosselklappenwelle in Öffnungsrichtung der Drosselklappe verstellbar ist und zwar
- im Fahrbetrieb zwischen Leerlauf und Vollast gegen die Kraft einer ersten Rückstellfeder von einem Fahrpedal über einen mit dem Fahrpedal gekoppelten Mitnehmer und
- im Leerlaufbereich zwischen LLₘᵢₙ und LLₘₐₓ gegen die Kraft einer zweiten Rückstellfeder von einem elektronisch gesteuerten, elektromotorischen Stellantrieb über ein erstes Getriebe, welches im Fahrbetrieb außer wirkung ist.
Verstelleinrichtungen für Drosselklappen oder Einspritzpumpen von Brennkraftmaschinen müssen eine optimale Regelung über den gesamten Leistungsbereich gewährleisten. Hierzu bedarf es einen komplizierten Aufbaus bzw. einer komplizierten Steuerung. So weisen Vergaser beispielsweise neben der eigentlichen Einrichtung zur Gemischbildung Zusatzeinrichtungen, wie Abmagerungs-, Start-, Leerlauf-, Beschleunigungs-, Spareinrichtungen usw. auf. Die Einrichtungen verkomplizieren den Aufbau des Vergasers und erfordern einen erhöhten Bauaufwand, indem zusätzliche Einspritzdüsen, Pumpen, besondere Ausgestaltungen der Düsennadeln und separate Luftzuführungen erforderlich sind, ganz abgesehen von den hiermit verbundenen hohen Steuerungsanforderungen.

Von besonderer Bedeutung ist bei derartigen Verstelleinrichtungen die Beherrschung des Leerlaufbereichs, bei dem von den Brennkraftmaschinen nur eine minimale Leistung abgegeben wird, dieser aber gerade bei Kraftfahrzeugen unter Umständen Verbraucher gegenüberstehen, die eine große Leistung fordern, wie Gebläse, Heckscheibenheizung, Klimaanlage usw. Um diesen fallweise auftretenden Leistungsanforderungen Rechnung zu tragen, ist eine Regelung der Verstelleinrichtung zwischen einer minimalen Leerlaufstellung (LLₘᵢₙ) und einer maximalen Leerlaufstellung (LLₘₐₓ) erforderlich. Bei Ausfall der Regelung ist eine Leerlauf-Notstellung des Stellgliedes bzw. Steuerelements sicherzustellen.

Für den Fahrbetrieb sind Verstelleinrichtungen bekannt geworden, bei denen vom Fahrpedal ein elektrischer Sollwert vorgegeben und das Stellglied (Drosselklappe, Einspritzpumpe) durch einen elektromotorischen Stellantrieb verstellt wird, der von einem elektronischen Regler nach Maßgabe der Differenz zwischen dem Sollwert und einem vom Stellglied generierten Istwert angesteuert wird. Dem elektronischen Regler können auch noch andere Signale zugeführt werden. So kann man beispielsweise ein Durchdrehen der Antriebsräder feststellen und über den Regler im Sinne einer Leistungsminderung auf die Brennkraftmaschine einzuwirken (ASR = Antischlupfregelung).

Der Erfindung liegt die Aufgabe zugrunde, eine Verstelleinrichtung der eingangs genannten Art zu schaffen, die im Fahrbereich unter normalen Bedingungen ein direktes mechanisches Öffnen der Drosselklappe ermöglicht, die im Leerlaufbetrieb eine feinfühlige Regelung der unterschiedlichen auftretenden Belastungsfälle gestattet und die ohne wesentlichen baulichen Mehraufwand auch für eine Antischlupfregelung nutzbar ist.

Diese Aufgabe wird erfindungsgemäß dadurch gelöst, daß
- zwischen Drosselklappenwelle und Stellantrieb ein zweites Getriebe vorgesehen ist, das eine mit der Abtriebswelle des Stellantriebs drehfest verbundenes Zahnrad und eine auf der Drosselklappenwelle drehbar gelagertes Zahnradsegment mit einem Hebel umfaßt,
- Zahnrad und Zahnradsegment nur im Fahrbetrieb miteinander in Eingriff stehen und dabei die Drosselklappenwelle über den Hebel und einen Mitnehmer in Schließrichtung der Drosselklappe vestellbar ist.
Vorteilhafte Ausgestaltungen des Erfindungsgedankens sind in den Unteransprüchen 2 bis 6 beschrieben.

In der US-PS 45 26 060 ist eine Verstelleinrichtung für eine Drosselklappe beschrieben, die für die Funktionen Leerlaufregelung und automatische Gechwindigkeitsregelung konzipiert ist. Diese Einrichtung umfaßt ein schaltbares Planetengetriebe, um in den beiden Funktionsbereichen mit unterschiedlichen Übersetzungsverhältnissen arbeiten zu können. Bei dieser bekannten Verstelleinrichtung kann der elektromotorische Stellantrieb die Drosselklappe nicht gegen eine vom Fahrpedal vorgegebene Position in Schließstellung verstellen, d. h. eine Antischlupfregelung ist damit nicht möglich. Außerdem ist das Planetengetriebe mit den elektromagnetischen Schalteinrichtungen vergleichsweise aufwenig, wenn es lediglich darum geht, für die beiden Fahrbereiche unterschiedliche Übersetzungsverhältnisse vorzusehen.

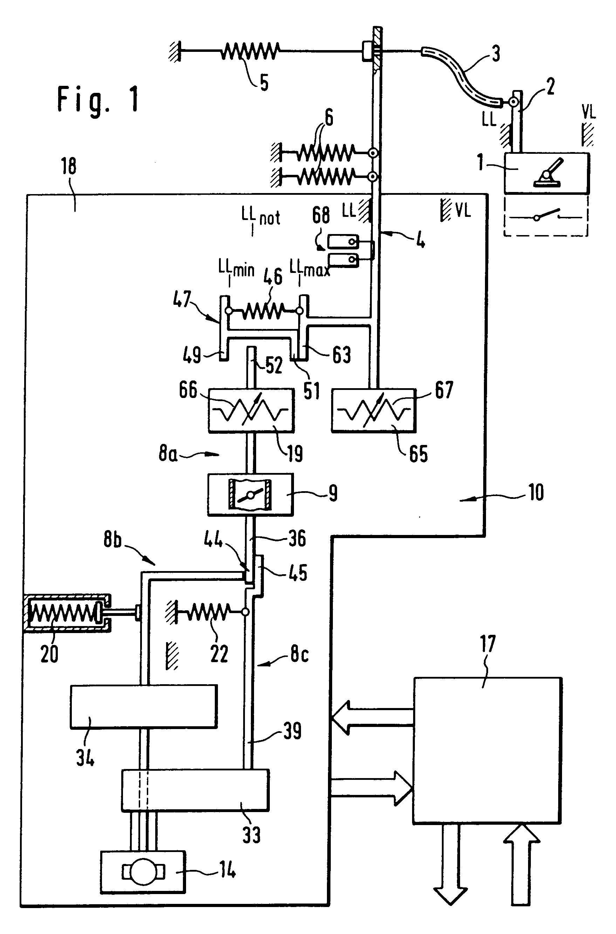

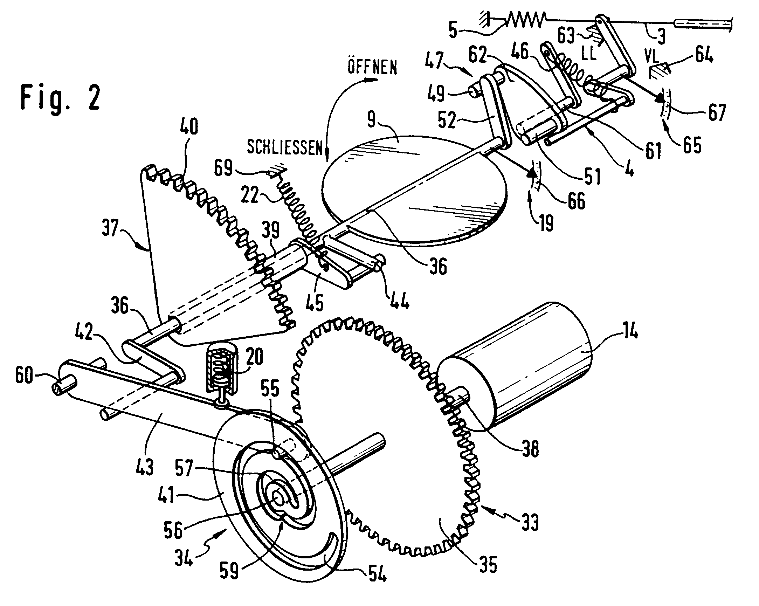

Weitere Einzelheiten und Vorteile der Erfindung werden anhand des in den Figuren 1 und 2 dargestellten Ausführungsbeispiels näher erläutert.
- Fig. 1: zeigt ein Blockschaltbild zur Verdeutlichung der prinzipiellen Funktion der erfindungsgemäßen Verstelleinrichtung,
- Fig. 2: zeigt in perspektivischer Darstellung eine konstruktive Ausführungsform der Verstelleinrichtung gemäß Fig. 1.

Die in dem Rahmen 18 dargestellten Teile gemäß Figur 1 bilden ein Stellglied bzw. eine Verstelleinrichtung 10, die in einer Baueinheit zusammengefaßt sind. Zu der Verstelleinrichtung 10 gehört ein Stellmotor bzw. Elektromotor 14, der über ein nur schematisch angedeutetes erstes Getriebe 33 mit einer Hohlwelle 39 und über ein zweites Getriebe 34 mit einer Drosselklappenwelle 36 einer Drosselklappe 9 antriebsmäßig verbunden ist. Über die Getriebe 33,34 werden die Stellkräfte des Elektromotors 14 zur Drosselklappe 9 übertragen und dadurch wird eine Verstellung in die gewünschte Position herbeigeführt.

Wie aus Figur 1 hervorgeht, kann die Verstelleinrichtung 10 über ein Fahrpedal 1 verstellt werden, wobei durch Betätigung des Fahrpedals 1 ein Hebel 2 zwischen einem Leerlaufanschlag LL und einem Vollastanschlag VL verschoben und über eine Rückzugfeder 5 in Leerlaufrichtung LL vorgespannt wird. Das Fahrpedal 1 ist mittels eines Gaszugs 3 an einen Mitnehmer 4 angeschlossen, so daß bei Betätigung des Fahrpedals 1 der Mitnehmer 4 in Richtung des Vollastanschlags VL verschoben wird. An den Mitnehmer 4 sind Rückstellfedern 6 angeschlossen, die diesen in Leerlaufrichtung LL vorspannen. Solange der Gaszug 3 nicht beaufschlagt wird, liegt der Mitnehmer 4 an dem ihm zugeordneten Leerlaufanschlag LL an.

Der Mitnehmer 4 wirkt über eine Feder 46 mit einem Freilaufhaken 47 zusammen, der erfindungsgemäß aus einem schwenkbar gelagerten Gestänge 61 mit einer daran befestigten Platte 62 besteht. An der Platte 62 befinden sich zwei mit Abstand angeordnete Mitnehmer 49,51, die eine Ausnehmung bilden, in der ein erstes Steuerelementteil 8a mit einem Hebel 52 aufgenommen ist.

Der Freilaufhaken 47 wird mittels der Feder 46 gegen einen am Mitnehmer 4 vorgesehenen Anschlag 63 gezogen, so daß sich der Freilaufhaken 47 von diesem wegbewegen kann.

Das erste Steuerelementeil 8a besteht aus dem Hebel 52 und einer diesen aufnehmenden Drosselklappenwelle 36. Die erfindungsgemäße Vertelleinrichtung 10 weist neben dem ersten Steuerelementteil 8a ein zweites als Lenker 43 eines Getriebes 34 ausgebildetes Steuerelementteil 8b auf, das über dieses Getriebe 34 mit einem Elektromotor 14 antriebsverbunden ist. Innerhalb des zweiten steuerelementteils 8b erfolgt mittels eines in seinem Aufbau und in seiner Funktion nachstehend noch näher beschriebenen Getriebes 34 eine Übersetzung der stellmotorigen Bewegung.

Neben den beiden steuerelementteilen 8a,8b ist ein drittes als Hohlwelle 39 ausgebildetes Steuerelementteil 8c vorgesehen, das über ein weiteres bzw. erstes Getriebe 33 ebenfalls an den Elektromotor 14 ankuppelbar ist.

Die Hohlwelle 39 weist endseitig einen Hebel 45 auf, der gegen einen an der Drosselklappenwelle 36 angeordneten Mitnehmer 44 zur Anlage bringbar ist, so daß der Hebel 45 und der Mitnehmer 44 eine Einwegkupplung darstellen. An die Hohlwelle 39 ist eine Feder 22 angeschlossen, die mit ihrem anderen Ende an einen ortsfesten Punkt 69 in der Verstelleinrichtung 10 angeschlossen ist und die Hohlwelle 39 und somit auch die Drosselklappenwelle 36 mit der zugehörigen Drosselklappe 9 in Richtung minimaler Leerlaufstellung (LLmin) vorspannt.In dieser Stellung (LLmin) liegt auch das erste steuerelementteil 8a mit seinem Hebel 52 gegen den Mitnehmer 49 an, so daß über den gesamten Leerlaufregelbereich (LLₘᵢₙ bis LLₘₐₓ) der Freilaufhaken 47 in Leerlaufrichtung LLmin vorgespannt ist. Wird beispielsweise das Fahrpedal 1 betätigt, so wird über den Mitnehmer 49 die Drosselklappenwelle 36 außerhalb des Leerlaufregelbereichs, d.h. Teillast- bzw. Vollastbetrieb, betätigt.

Um die beiden Steuerelementteile 8a und 8b in einer Drehrichtung miteinander mechanisch zu kuppeln, liegt, wie bereits erläutert, der Hebel 45 gegen den Mitnehmer 44 an. Ferner ist die Drosselklappenwelle 36 über den Mitnehmer 42 mit dem Lenker 43 des zweiten Getriebes 34 wirkungsmäßig verbunden.

Das zweite Getriebe 34 besteht aus dem Lenker 43, der auf einem Bolzen 60 schwenkbar angeordnet ist. Der Lenker 43 weist an seinem dem Bolzen 60 gegenüber liegenden Ende einen Nocken 55 auf. Dieser ist in in einer Kurvenscheibe 41 vorgesehenen Nut 54 aufgenommen. Die Nut 54 hat die Form einer Archimedes-Spirale und kann sich in vorteilhafter Weise über einen Winkel von insgesamt 720 Grad erstrecken, so daß innerhalb von zwei Umdrehungen des Elektromotors 14 eine Verstellung des Lenkers 43 und somit eine Verstellung der Drosselklappenwelle 36 im Leerlaufregelbereich zwischen LLmin und LLmax nur in Richtung Öffnen der Drosselklappe 9 erfolgt. Das zweite Getriebe 34 bietet den Vorteil, daß auf einfache Weise große Übersetzungen möglich sind, beispielsweise 1:30 bis 1:40 und mehr.

Unterstellt man, daß die Drosselklappe 9 zwischen den Betriebsstellungen LLmin und LLmax in einem Winkelbereich von 8^{o} mittels des Elektromotors 14 und des zweiten Getriebes 34 verstellt wird, so wird die Abtriebswelle 38 des Eektromotors 14 um 56o^{o} gedreht. Die Notlauffeder 20 stellt dabei sicher, daß bei einem Defekt in einer elelektronischen Regeleinrichtung 17 oder des Elektromotors 14 die Widerstandsmomente des Elektromotors 14 oder der Getriebeteile überwunden werden und eine Rückführung der Drosselklappe 9 in die Leerlaufnotposition (LLnot) erfolgt.

Bei der Übersetzung der Drehbewegung der Abtriebswelle 38 des Elektromotors 14 ist die Istwerterfassungseinrichtung 19 vorteilhaft im Bereich des schwenkbaren Freilaufhakens 47 angebracht, während die Sollwerterfassungeinrichtung 65 im Bereich des Mitnehmers 4 vorgesehen ist.

Das dem zweiten Getriebe 34 vorgeschaltete Getriebe 33 weist eine auf der Abtriebswelle 38 des Elektromotors 14 angeordnete Abtriebsscheibe 35 auf. Diese steht über eine Antriebsscheibe 37 mit der Drosselklappenwelle 36 wirkungsmäßig in Antriebsverbindung, wenn das zweite Getriebe 34 keinen Stelleinfluß auf die Drosselklappenwelle 36 mehr hat. Hierzu schließt sich an die Nut 54 ein konzentrisch zur Drehachse 56 angeordnetes Kreisbogenstück 57 an, in dem der Nocken 55 aufgenommen ist, wenn die Antriebsscheibe 35 mit der Antriebsscheibe 37, die als Zahnradsegment 40 ausgebildet sein kann, in Eingriff steht. Das Zahnradsegment 40 ist auf der Hohlwelle 39 angeordnet, die mit ihrem Hebel 45 auf den Mitnehmer 44 der Drosselklappenwelle 36 eine Stellkraft ausübt und diese in Richtung Schließen der Drosselklappe 9 verstellt.

Die beiden Getriebe 33,34 sind so aufeinander abgestimmt, daß das erste Getriebe 33 nur oberhalb des Leerlaufbereichs, d.h. im Teillast- bzw. im Vollastbereich der Brennkraftmaschine zum Einsatz kommt. Aus Figur 1 ist ersichtlich, daß der Hebel 45 mittels der Feder 22 gegen den Mitnehmer 44 der Drosselklappenwelle 36 gezogen wird, so daß bei Einschaltung des Elektromotors 14 die Drosselklappenwelle 36 über das erste Getriebe 33 nur in Richtung Schließen der Drosselklappe 9 gedreht werden kann. Tritt ein Antischlupfregelfall (ASR) auf, so erfolgt mittels des ersten Getriebes 33 ein Abregeln der Brennkraftmaschine. Hierdurch wird die Betriebssicherheit erhöht, da sichergestellt wird , daß im ASR-Regelfall kein Aufregeln der Brennkraftmaschine möglich ist, weil der Hebel 45 die Drosselklappenwelle 36 nicht in Richtung Öffnen drehen kann.

In Figur 1 ist die elektronische Regeleinrichtung 17, die Aufbereitungs-, Logik- und Regelschaltungen enthält, schematisch angedeutet. In ihrem Digitalteil speichert die Regeleinrichtung 17 Werte für die Fahrzeuganpassung und verarbeitet die digitalen oder digitalisierten Werte verschiedener Eingangsgrößen, die dann die gewünschte Stellung der Drosselklappe 9 über ein Analogteil regeln. Mit der elektronischen Regeleinrichtung 17 wirkt die eine zu den Steuerelementteilen 8a,8b gehörende Istwerterfassungseinrichtung 19 sowie eine dem Mitnehmer 4 zugeordnete, die jeweilige Position des Mitnehmers 4 ermittelnde Sollwerterfassungseinrichtung 65 zusammen.

Der ersten Istwerterfassungseinrichtung 19 ist ein Potentiometer 66 und der Sollwerterfassungseinrichtung 65 ein zweiter Potentiometer 67 zugeordnet.

Die Regeleinrichtung 17 hat die Aufgabe, alle eingegebenen Signale, z.B. Geschwindigkeit, mittels der Potentiometer 66,67 (Figur 2) zu erfassen und miteinander zu vergleichen. Weicht beispielsweise die Fahrgeschwindigkeit vom gesetzten Sollwert ab, so wird das Stellglied so lange angesteuert, bis die vorgegebene Geschwindigkeit erreicht ist.

Von der elektronischen Regeleinrichtung 17 werden darüberhinaus über einen Leerlaufkontakt 68, der von dem Mitnehmer 4 aktiviert wird, Signale erfaßt, wenn dieser an dem ihm zugeordneten Leerlaufanschlag LL zur Anlage kommt.

Die elektronische Regeleinrichtung 17 dient im Zusammenwirken mit der Istwerterfassungseinrichtung 19 und den externen Bezugsgrößen dem Zweck, eine Sicherheitslogik betreffend der Steuerung des ersten und zweiten steuerelementteils 8a,8b aufzubauen. Sobald die elektronische Regeleinrichtung 17 oder der Elektromotor 14 nicht mehr einwandfrei funktionieren, wird durch die in Richtung der maximalen Leerlaufstellung vorgespannte Feder 22 die Drosselklappe 9 in die Leerlaufnot-Stellung LLₙₒₜ bewegt.

Mit der erfindungsgemäßen Verstelleinrichtung kann über den gesamten Leerlaufbereich mittels eines einzigen Stellglieds eine Regelung nach oben (LLmax) und nach unten (LLmin) erfolgen. Ferner ist es möglich, mittels des zweiten Getriebes 34 außerhalb des Leerlaufregelbereichs im Antischlupfregelfall (ASR) ein Abregeln der Brennkraftmaschine sicherzustellen.

### Bezugszeichenliste

- 1: Fahrpedal
- 2: Hebel
- 3: Gaszug
- 4: Mitnehmer
- 5: Rückzugfeder
- 6: Rückstellfeder
- 8a: Steuerelementteil
- 8b: Steuerelementteil
- 8c: Steuerelementteil
- 9: Drosselklappe
- 10: Lastverstelleinrichtung
- 14: Elektromotor
- 17: elektr.Regeleinrichtung
- 18: Rahmen
- 19: Istwerterfassungeinrichtung
- 20: Notlauffeder
- 22: Feder
- 33: erstes Getriebe
- 34: zweites Getriebe
- 35: Abtriebsscheibe
- 36: Drosselklappenwelle
- 37: Antriebsscheibe
- 38: Abtriebswelle
- 39: Hohlwelle
- 40: Zahnradsegment
- 41: Kurvenscheibe
- 42: Mitnehmer
- 43: Lenker
- 44: Mitnehmer
- 45: Hebel
- 46: Feder
- 47: Freilaufhaken
- 49: Mitnehmer
- 51: Mitnehmer
- 52: Hebel
- 54: Archimedes-Spirale
- 55: Nocken
- 56: Drehachse
- 57: Kreisbogenstück
- 59: Raststelle
- 60: Bolzen
- 61: Gestänge
- 62: Platte
- 63: Anschlag
- 64: 2.Anschlag
- 65: Sollwerterfassungseinrichtung
- 66: Potentiometer
- 67: Potentiometer
- 68: Leerlaufkontakt
- 69: ortsfester Punkt

## Patentansprüche

1. Verstelleinrichtung für eine im Ansaugstutzen einer Brennkraftmaschine drehbar gelagerten Drosselklappe (9), wobei die Drosselklappenwelle (36) in Öffnungsrichtung der Drosselklappe (9) verstellbar ist, und zwar
- im Fahrbetrieb zwischen Leerlauf (LL) und Vollast (VL) gegen die Kraft einer ersten Rückstellfeder (6) von einem Fahrpedal (1) über einen mit dem Fahrpedal (1) gekoppelten Mitnehmer (4) und
- im Leerlaufbereich zwischen LLₘᵢₙ und LLₘₐₓ gegen die Kraft einer zweiten Rückstellfeder (22) von einem elektronisch gesteuerten, elektromotorischen Stellantrieb (14) über ein erstes Getriebe (34), welches im Fahrbetrieb ausser wirkung ist,
dadurch gekennzeichnet, daß
- zwischen Drosselklappenwelle (36) und Stellantrieb (14) ein zweites Getriebe (33) vorgesehen ist, das eine mit der Abtriebswelle (38) des Stellantriebs (14) drehfest verbundenes Zahnrad (35) und eine auf der Drosselklappenwelle (36) drehbar gelagertes Zahnradsegment (37) mit einem Hebel (45) umfaßt,
- Zahnrad (35) und Zahnradsegment (37) nur im Fahrbetrieb miteinander in Eingriff stehen und dabei die Drosselklappenwelle (36) über den Hebel (45) und einen ersten Mitnehmer (44) in Schließrichtung der Drosselklappe (9) vestellbar ist.

2. Verstelleinrichtung nach Anspruch 1, dadurch gekennzeichnet, daß das erste Getriebe (34) aus einer auf der Abtriebswelle (38) des Stellantriebs (14) befestigten Kurvenscheibe (41) und ein eine mit der Drosselklappenwelle (36) achsgleich gelagerten Lenker (43) besteht.

3. Verstelleinrichtung nach Anspruch 2, dadurch gekennzeichnet, daß die Kurvenscheibe (41) eine Steuerkurve aufweist, die ein achsnahes Kreisbogenstück (57) und eine sich daran nach außen anschließende Archimedes-Spirale (54) umfaßt, und daß der Lenker (43) mit einem endseitigen Nocken (55) in die Steuerkurve eingreift.

4. Verstelleinrichtung nach Anspruch 3, dadurch gekennzeichnet, daß ein zweiter Mitnehmer (42) der Drosselklappenwelle (36) mittels der zweiten Rückstellfeder (22) indirekt gegen den Lenker (43) vorgespannt ist.

5. verstelleinrichtung nach Anspruch 4, dadurch gekennzeichnet, daß der Lenker (43) im Leerlaufbereich zwischen LLₘᵢₙ und einer Notlaufstellung LLₙₒₜ durch eine Notlauffeder (20) in Öffnungsrichtung der Drosselklappe (9) vorgespannt ist.

6. verstelleinrichtung nach Anspruch 1, dadurch gekennzeichnet, daß zwischen dem mit dem Fahrpedal (1) gekoppelten Mitnehmer (4) und der Drosselklappenwelle (36) ein koaxial zur Drosselklappenwelle (36) drehbarer Freilaufhaken (47) vorgesehen ist, der zwei weitere Mitnehmer (49, 51) aufweist, und mittels einer Feder (46) gegen den Mitnehmer (4) vorgespannt ist, wobei zwischen den weiteren Mitnehmern (49, 51) ein mit der Drosselklappenwelle (36) drehfest verbundener Hebel (52) schwenkbar ist und der Abstand zwischen den weiteren Mitnehmern (49, 51) dem Leerlaufbereich der Drosselklappe (9) entspricht.

## Claims

1. An adjusting device for a throttle valve (9) rotatably mounted in the intake pipe of an internal combustion engine, wherein the throttle valve spindle (36) can be adjusted in the direction of opening of the throttle valve (9), and in practice
- in driving operation between idle-running (LL) and full load (VL) against the force of a first pull-back spring (6) by an accelerator pedal (1) via a carrier (4) coupled to the accelerator pedal (1) and
- in the idle-running range between LLₘᵢₙ and LLₘₐₓ against the force of a second pull-back spring (22) by an electronically controlled, electric motor-driven actuating drive (14), via a first transmission (34) which is ineffective in driving operation,
characterised in that
- a second transmission (33) is provided between the throttle valve spindle (36) and the actuating drive (14), which second transmission comprises a gear wheel (35) attached rotationally fixed to the driven shaft (38) of the actuating drive (14) and a gear wheel segment (37) rotatably mounted on the throttle valve spindle (36) with a lever (45),
- the gear wheel (35) and the gear wheel segment (37) are only in engagement with each other in driving operation, and the throttle valve spindle (36) can thus be adjusted in the direction of closing of the throttle valve (9) via the lever (45) and a first carrier (44).

2. An adjusting device according to claim 1, characterised in that the first transmission (34) consists of a cam disc (41) attached to the driven shaft (38) of the actuating drive (14) and a connecting rod (43) mounted coaxially with the throttle valve spindle (36).

3. An adjusting device according to claim 2, characterised in that the cam disc (41) has a control curve which comprises a circular arc portion (57) near the axis and an Archimedes spiral (54) outwardly adjoining the latter, and that the connecting rod (43) engages in the control curve by means of a cam (55) at its end.

4. An adjusting device according to claim 3, characterised in that a second carrier (42) of the throttle valve spindle (36) is indirectly biassed towards the connecting rod (43) by means of the second pull-back spring (22).

5. An adjusting device according to claim 4, characterised in that the connecting rod (43) is biassed in the direction of opening of the throttle valve (9), in the idle-running range between LLₘᵢₙ and an emergency-running position LLₙₒₜ, by an emergency-running spring (20).

6. An adjusting device according to claim 1, characterised in that a freewheel clutch (47), which has two additional carriers (49, 51) and which can rotate coaxially with the throttle valve spindle (36), is provided between the carrier (4) and the throttle valve spindle (36) and is biassed towards the carrier (4) by means of a spring (46), wherein a lever (52) attached rotationally fixed to the throttle valve spindle (36) can swivel between the additional carriers (49, 51), and the distance between the additional carriers (49, 51) corresponds to the idle-running range of the throttle valve (9).

## Revendications

1. Dispositif de réglage d'un papillon (9) des gaz, tourillonné dans la tubulure d'aspiration d'un moteur à combustion interne, dispositif dans lequel l'axe (36) de ce papillon (9) peut pivoter dans le sens de l'ouverture dudit papillon (9)
- pendant la marche, entre les positions de ralenti (LL) et de pleine charge (VL), contre l'action d'un ressort de rappel (6), sous la commande d'une pédale d'accélérateur (1)et par l'entremise d'un levier entraîneur (4) accouplé à cette pédale (1) et
- dans la plage du ralenti, entre les positions LLₘᵢₙ et LLₘₐₓ, contre l'action d'un ressort de rappel (22), sous la commande d'un servomoteur (14) électrique piloté électroniquement, par l'entremise d'une première transmission (34) qui est hors service pendant la marche,
dispositif caractérisé en ce que
- une seconde transmission (33), qui comprend une roue dentée (35) solidaire en rotation de l'arbre de sortie (38) du servomoteur (14) et un secteur denté (37), tournant librement sur l'axe (36) du papillon (9) et comportant un levier (45), est disposée entre cet axe (36) du papillon et le servomoteur (14),
- roue dentée (35) et segment denté (37) ne sont en prise que pendant la marche et l'axe (36) peut alors pivoter dans le sens de la fermeture du papillon (9) sous la commande du levier (45) et d'un premier taquet (44).

2. Dispositif de réglage selon la revendication 1, caractérisé en ce que la première transmission (34) est composée d'une came (41), calée sur l'arbre de sortie (38) du servomoteur (14), et d'une bielle (43), qui peut pivoter coaxialement à l'axe (36) du papillon.

3. Dispositif de réglage selon la revendication 2, caractérisé en ce que la came (41) comporte une piste qui comprend près de l'axe une partie (57) en arc de cercle, à laquelle se raccorde extérieurement une spirale d'Archimède (54), la bielle (43) étant engagée dans cette piste par un doigt (55) de son extrémité libre.

4. Dispositif de réglage selon la revendication 3, caractérisé en ce qu'un second levier (42), ou bras, de l'axe (36) du papillon est appliqué indirectement contre la bielle (43) au moyen du second ressort de rappel (22).

5. Dispositif de réglage selon la revendication 4, caractérisé en ce que, dans la plage du ralenti, entre LLₘᵢₙ et une position de secours LLₙₒₜ, un ressort de secours (20) sollicite la bielle (43) dans le sens de l'ouverture du papillon (9).

6. Dispositif de réglage selon la revendication 1, caractérisé en ce qu'il est disposé, entre l'entraîneur (4) accouplé à la pédale (1) et l'axe (36) du papillon, un crochet (47) de course à vide,qui peut pivoter coaxialement à cet axe (36), porte deux autres taquets (49, 51) et est sollicité vers cet entraîneur (4) par un ressort (46), un levier (52), qui est solidaire de cet axe (36) du papillon, pouvant pivoter entre ces autres taquets (49, 51), et la distance qui sépare ces derniers correspondant à la plage de ralenti de ce papillon (9).
